# FASCICULE DE BREVET EUROPEEN

(11) **EP 2 291 948 B1**
(45) Date de publication et mention de la délivrance du brevet: **22.10.2014**
(21) Numéro de dépôt: 09750042.5
(22) Date de dépôt: 05.05.2009
(51) Int. Cl.: H04L 9/32, G06K 19/077, G06K 7/08

(54) **Procédé d'authentification d'une étiquette radio par un lecteur radio**
Verfahren zum Authentifizieren eines Funketiketts durch einen Funkleser
Method of authenticating a radio tag by a radio reader

(30) Priorité: 09.05.2008 FR 0853055
(43) Date de publication de la demande: 09.03.2011
(73) Titulaire: Orange, 75015 Paris (FR)
(72) Inventeur: CANARD, Sébastien, F-14000 Caen (FR); COISEL, Iwen, 1300 Wavre (BE)
(86) Numéro de dépôt international: PCT/FR2009/050828
(87) Numéro de publication internationale: WO 2009/141561

(56) Documents cités:
- EP-A- 1 873 674
- WO-A-2006/070189
- CHIEN ET AL: "Mutual authentication protocol for RFID conforming to EPC Class 1 Generation 2 standards" COMPUTER STANDARDS AND INTERFACES, ELSEVIER SEQUOIA. LAUSANNE, CH, vol. 29, no. 2, 29 novembre 2006 (2006-11-29), pages 254-259, XP005783548 ISSN: 0920-5489

## Description

L'invention concerne une technique d'authentification d'une étiquette radio par un lecteur radio.

L'invention trouve une application particulièrement intéressante dans le domaine de la radio-identification, de l'anglais "Radio Frequency Identification", ou "RFID".

La radio-identification est une technique pour stocker et récupérer des données à distance en utilisant des marqueurs appelés radio-étiquettes, ou étiquettes radio (on parle également de "tag RFID"). Une étiquette radio est un petit objet, tel qu'une étiquette auto-adhésive, qui peut être collée sur, ou incorporée dans des objets ou produits. Elle comprend une antenne associée à une puce électronique qui lui permet de recevoir et de répondre à des requêtes radio émises depuis un émetteur-récepteur appelé lecteur. On utilise par exemple les étiquettes radio pour identifier des personnes lorsque les étiquettes sont intégrées dans des passeports, dans des titres de transport ou dans des cartes de paiement, ou pour identifier des produits comme avec un code barre.

De manière classique, le lecteur envoie un signal d'interrogation particulier sur une voie radio, auquel répond l'étiquette. Une réponse possible de l'étiquette est une identification numérique de cette étiquette. Le lecteur peut alors consulter une base de données pour identifier, ou assurer un contrôle d'accès de l'étiquette. Dans une optique de protection de la vie privée, notamment de la vie privée de personnes détenteurs d'étiquette radio, il est généralement souhaitable que le protocole d'authentification d'étiquettes radio par un lecteur possède trois propriétés :
- le protocole doit être anonyme, c'est-à-dire qu'il ne doit pas être possible pour un adversaire malveillant d'identifier une étiquette qui intervient dans une authentification.
- l'étiquette ne doit pas être traçable, c'est-à-dire qu'il ne doit pas être possible de relier deux authentifications différentes d'une même étiquette, et
- si l'adversaire malveillant obtient l'identifiant d'une étiquette par quelque méthode que ce soit : par une méthode dite de "reverse engineering", par une attaque physique sur la carte, etc., on ne doit pas pouvoir reconnaître d'anciennes authentifications de l'étiquette. Cette dernière propriété est dite propriété de "forward privacy".

Lorsqu'on utilise un tel protocole pour l'identification des personnes, on comprend que ces trois propriétés participent au respect de la vie privée.

Il a été proposé par Ohkubo, Suzuki et Kinoshita un protocole, dit protocole "OSK", qui assure ces trois propriétés de sécurité. Le protocole peut être décrit comme suit : une étiquette dispose d'un identifiant unique, noté ID, et un lecteur adapté pour lire l'étiquette a accès à une base de données regroupant l'ensemble des identifiants d'étiquette. Sur réception d'une requête d'authentification émise par le lecteur, l'étiquette répond en renvoyant un haché de son identifiant, calculé à partir d'une première fonction de hachage, par exemple "SHA-256" (pour "Secure Hash Algorithm"). Notons ce haché H₁(ID).

Ensuite, l'étiquette met à jour son identifiant ID en calculant un deuxième haché de son identifiant, noté H₂(ID), en utilisant une deuxième fonction de hachage H₂, différente de la première fonction. Le nouvel identifiant ID est alors H₂(ID).

Sur réception du premier haché de l'identifiant H₁(ID), le lecteur calcule le haché des identifiants de la base de données en utilisant la première fonction de hachage. S'il trouve une valeur égale à H₁(ID), alors, le lecteur accepte l'authentification de l'étiquette et met à jour l'identifiant ID de la même manière que l'étiquette : en calculant H₂(ID). Si le lecteur ne trouve pas de valeur égale à H₁(ID) dans la base de données des identifiants, alors le lecteur calcule le haché de tous les identifiants en utilisant la deuxième fonction de hachage H₂ puis il renouvelle l'opération avec les identifiants nouvellement calculés jusqu'à ce que l'authentification réussisse.

On constate qu'avec ce protocole :
- ce qui circule entre l'étiquette et le lecteur est une valeur obtenue par application d'une fonction de hachage à un identifiant. Une fonction de hachage, notée ici H, a comme propriété que pour tout x dont on connaît l'image H(x) par la fonction de hachage, alors il est très difficile de calculer y tel que H(x) = H(y). Grâce à cette propriété, l'anonymat de l'étiquette est respecté.
Un adversaire malveillant qui récupère le haché de l'identifiant ne peut a priori pas retrouver l'identifiant ;
- chaque message envoyé par l'étiquette en réponse à une requête d'authentification correspond à un identifiant différent puisque l'identifiant d'une étiquette est mis à jour entre deux authentifications. La propriété de non traçabilité est donc respectée ; et
- l'identifiant d'une étiquette étant mis à jour entre deux requêtes d'authentification et la fonction de hachage étant réputée non inversible, alors l'adversaire malveillant qui récupérerait un identifiant d'étiquette ne serait pas en mesure d'associer de précédentes authentifications à cet identifiant d'étiquette. Ainsi, la propriété dite de "forward secrecy" est respectée.

Document EP-A-1873674 décrit un procédé et système d'authentification d'une étiquette radio par un lecteur radio, l'étiquette possédant un identifiant accessible au lecteur via une base de données d'identifiant d'étiquette, comprenant un envoi d'une requête d'authentification par le lecteur à l'étiquette; un envoi par l'étiquette d'une réponse, calculée par application d'une première fonction à au moins l'identifiant; un calcul par l'étiquette et par le lecteur d'un nouvel identifiant, par application d'une deuxième fonction à l'identifiant; et si la réponse envoyée par l'étiquette correspond à un résultat obtenu par application de ladite première fonction à un identifiant de la base, un envoi par le lecteur d'une valeur calculée par application de la deuxième fonction à au moins l'identifiant.

Cependant ce protocole d'authentification présente quelques faiblesses. En effet, puisque l'étiquette met à jour son identifiant après chaque requête d'authentification du lecteur, l'adversaire qui ferait m requêtes successives d'authentification à l'étiquette provoquerait m mises à jour par l'étiquette de son identifiant et une désynchronisation notable entre l'étiquette et le lecteur. Ainsi, lors d'une authentification réelle demandée par le lecteur, celui-ci devra mettre à jour m fois tous les identifiants de la base de données des identifiants avant de trouver l'identifiant correspondant à l'étiquette en cours d'authentification. Les m mises à jour correspondent à une resynchronisation du lecteur avec l'étiquette. Une telle attaque, de type déni de service, a pour but de ralentir, voire de saturer un tel système de radio-identification pour à terme empêcher d'autres authentifications.

Lorsque le nombre d'étiquettes gérées par le système à radio-identification est important, alors l'authentification d'une étiquette devient coûteuse, en temps et en ressources. Cet exemple d'attaque, facile à mener, rend inefficace un protocole d'authentification dans un système à radio-identification. Dans un cas par exemple où un tel système est implanté dans des transports publics pour permettre à des abonnés d'accéder auxdits transports après s'être authentifié auprès d'une borne d'accès matérialisée par un portillon d'accès, en présentant leur carte d'abonnement contenant une étiquette radio, on imagine le mécontentement de ces abonnés s'ils doivent attendre plusieurs secondes que le portillon s'ouvre après avoir présenté leur carte d'abonnement, notamment aux heures de pointe.

Il existe donc un besoin pour un protocole d'authentification dans un système à radio-identification qui ne soit pas sensible à des attaques de type déni de service qui tendent à rendre le système à radio-identification inefficace.

L'invention répond à ce besoin en proposant un procédé d'authentification d'une étiquette radio par un lecteur radio, l'étiquette possédant un identifiant accessible au lecteur via une base de données d'identifiants d'étiquette, comprenant :
- un envoi d'une requête d'authentification par le lecteur à l'étiquette,
- un envoi par l'étiquette d'une réponse, calculée par application d'une première fonction à au moins l'identifiant,
- un calcul par l'étiquette et par le lecteur d'un nouvel identifiant, par application d'une deuxième fonction à l'identifiant,
caractérisé en ce qu'il comprend :
- si la réponse envoyée par l'étiquette correspond à un résultat obtenu par application de ladite première fonction à un identifiant de la base, un envoi par le lecteur d'une première valeur, calculée par application d'une troisième fonction audit identifiant de la base,
- si la première valeur envoyée correspond à une valeur obtenue par application à l'identifiant de l'étiquette de la troisième fonction, un remplacement dans l'étiquette de l'identifiant par le nouvel identifiant calculé par l'étiquette,
- un envoi d'une deuxième valeur au lecteur, obtenue par application d'une quatrième fonction au nouvel identifiant calculé par l'étiquette,
- si la deuxième valeur envoyée correspond à une valeur obtenue par application de la quatrième fonction au nouvel identifiant calculé par le lecteur, un remplacement dans la base de données de l'identifiant de l'étiquette par le nouvel identifiant.

Avec le procédé selon l'invention, l'étiquette et le lecteur ne mettent à jour l'identifiant de l'étiquette que sous certaines conditions.

Pour l'étiquette, la mise à jour de l'identifiant ne se fait qu'après avoir reçu du lecteur une preuve de la connaissance de l'identifiant de l'étiquette par le lecteur. Ainsi, l'étiquette est assurée d'avoir interagi avec un lecteur honnête. Pour le lecteur, la mise à jour de l'identifiant de l'étiquette dans la base de données des identifiants ne se fait qu'après avoir reçu de l'étiquette, et vérifié, un message attestant que l'étiquette a mis à jour son identifiant.

L'étiquette, respectivement le lecteur, est donc assurée d'avoir à faire à un lecteur, respectivement une étiquette, honnête.

Le message envoyé par l'étiquette au lecteur pour attester qu'elle a mis à jour son identifiant préserve de désynchronisations abusives, puisque ce message, envoyé après une mise à jour de son identifiant par l'étiquette, déclenche la mise à jour par le lecteur de l'identifiant de l'étiquette dans la base de données.

Il n'est pas possible de désynchroniser abusivement l'étiquette et la base de données. En effet, dans un cas où un adversaire envoie m requêtes d'authentification à une étiquette, celui-ci ne pouvant pas fournir le message attendu par l'étiquette, l'étiquette ne met pas à jour m fois son identifiant, comme elle le ferait selon un protocole classique de l'état antérieur de la technique. Ainsi, lors d'une authentification réelle, le lecteur n'a pas à mettre à jour m fois les identifiants de la base de données avant de retrouver celui de l'étiquette. Lorsque le lecteur gère un nombre important d'identifiants, de multiples mises à jour ralentissent notablement l'authentification d'une étiquette. Ainsi, le procédé selon l'invention n'est pas sensible à une telle attaque de l'adversaire, de type déni de service qui tend à ralentir, voire à saturer le lecteur pour empêcher d'autres authentifications.

Le procédé selon l'invention possède en outre des propriétés de sécurité attendues :
- le procédé d'authentification est anonyme : un identifiant qui circule entre l'étiquette et le lecteur est sous forme hachée, obtenu par application d'une ou de plusieurs fonctions de hachage à l'identifiant. Une fonction de hachage étant difficilement inversible, un adversaire malveillant qui récupère le haché de l'identifiant ne peut pas identifier l'étiquette qui intervient dans l'authentification ;
- une étiquette ne peut être tracée : dans un cas normal d'utilisation du protocole, deux authentifications successives d'une étiquette ne peuvent être reliées entre elles car chaque message envoyé par l'étiquette en réponse à une requête d'authentification correspond à un identifiant différent puisque l'identifiant d'une étiquette est mis à jour entre deux authentifications ;
- si un adversaire obtient l'identifiant d'une étiquette, il ne peut pas reconnaître de précédentes authentifications de l'étiquette. En effet, l'identifiant est mis à jour entre deux authentifications successives. En outre, l'utilisation de fonctions de hachage, difficilement inversibles, ne permet pas d'associer de précédentes authentifications à cet identifiant d'étiquette. Cette propriété est dite propriété de "forward secrecy".

En outre, le procédé d'authentification reste léger au niveau de l'étiquette puisqu'il ne nécessite que quatre calculs de haché.

Dans une réalisation de l'invention le procédé comprend, si la réponse envoyée par l'étiquette ne correspond à aucun résultat obtenu par application de ladite première fonction à chacun des identifiants d'étiquette de la base :
- une recherche de la réponse envoyée par l'étiquette parmi les identifiants de la base auxquels sont appliqués successivement la deuxième fonction, puis la première fonction,
- si la réponse envoyée par l'étiquette correspond à un résultat obtenu par application de la deuxième fonction, puis la première fonction à un identifiant d'étiquette de la base, une mise à jour dans la base de l'identifiant en appliquant la deuxième fonction audit identifiant.

Avec le procédé selon l'invention, il n'est pas possible pour un adversaire de désynchroniser plus d'une fois une étiquette et la base de données accédée par le lecteur. En effet, l'étiquette ne mettant à jour son identifiant qu'après avoir reçu du lecteur la première valeur H₃(ID), une désynchronisation peut se produire en interrompant le protocole après la mise à jour de l'identifiant par l'étiquette, et avant que l'étiquette n'envoie la deuxième valeur H₄(H₂(ID)) au lecteur. Dans ce cas, le lecteur ne met pas à jour la base et ne remplace pas l'identifiant de l'étiquette par le nouvel identifiant H₂(ID). L'étiquette et le lecteur sont donc désynchronisés une fois puisque le nouvel identifiant de l'étiquette est H₂(ID) alors que la base de données a toujours comme identifiant de l'étiquette ID. Cependant, il n'est pas possible de désynchroniser une nouvelle fois l'étiquette et la base de données.

En effet, dans un cas où un adversaire envoie une nouvelle requête d'authentification à l'étiquette, alors l'adversaire ne pouvant pas produire et envoyer à l'étiquette la première valeur H₃(ID) puisqu'il ne connaît pas l'identifiant de l'étiquette, l'étiquette ne va pas mettre à jour son identifiant.

Dans un second cas où un élément aléatoire est envoyé au lecteur en réponse à une requête d'authentification, afin que le lecteur cherche indéfiniment l'identifiant dans la base de données d'identifiants, le lecteur recherche dans la base un haché de l'élément aléatoire obtenu en appliquant la première fonction de hachage. S'il ne trouve pas le haché, alors il le recherche dans la base en appliquant à chacun des identifiants de la base la deuxième fonction de hachage puis la première fonction de hachage. S'il ne trouve pas le haché, le lecteur n'effectue plus aucune recherche, l'authentification échoue. Dans ce cas d'échec, il s'agit forcément d'une étiquette non authentique, ou fausse étiquette. Dans un cas, comme dans l'autre, aucun identifiant n'est mis à jour, que ce soit au niveau de l'étiquette, ou au niveau de la base de données.

Par contre, lorsque l'étiquette et le lecteur sont désynchronisés une fois (car l'étiquette a mis à jour son identifiant mais pas la base de données) et que le lecteur émet une requête d'authentification à l'attention de l'étiquette, alors il y a une resynchronisation de l'étiquette et de la base de données des identifiants. En effet, le lecteur qui reçoit la réponse de l'étiquette à la requête d'authentification trouvera cette réponse dans la base de données des identifiants lors de sa deuxième recherche dans la base, c'est-à-dire au cours de la recherche qu'il effectue en appliquant à chacun des identifiants de la base la deuxième fonction de hachage puis la première fonction de hachage. La réponse étant trouvée, l'identifiant de l'étiquette est alors mis à jour dans la base, et le protocole d'authentification se poursuit. Ainsi, l'étiquette et la base de données sont resynchronisées par cette requête d'authentification valide.

Dans une réalisation particulière du procédé selon l'invention :
- la requête d'authentification comprend un premier aléa (alea1) généré par le lecteur, et
- la réponse comprend un deuxième aléa (alea2) généré par l'étiquette, et un haché obtenu par application de la première fonction à une donnée comprenant l'identifiant de l'étiquette, le premier aléa (alea1) reçu du lecteur et le deuxième aléa (alea2).

L'utilisation d'aléas dans les messages renforce la sécurité du procédé d'authentification. L'envoi du premier aléa, alea1, par le lecteur permet d'éviter un rejeu lors d'une désynchronisation entre l'étiquette et le lecteur. Le deuxième aléa, alea2, généré par l'étiquette assure une non traçabilité entre plusieurs authentifications successives, notamment dans un cas d'attaque au cours de laquelle, certains messages qui circulent entre l'étiquette et le lecteur étant interceptés, l'identifiant de l'étiquette ne serait pas mis à jour par l'étiquette.

L'invention concerne également une étiquette radio adaptée pour être authentifiée par un lecteur radio, l'étiquette possédant un identifiant, et comprenant :
- des moyens de réception, agencés pour recevoir en provenance du lecteur une requête d'authentification et une première valeur,
- des moyens d'envoi, agencés pour envoyer au lecteur une réponse à ladite requête d'authentification et une deuxième valeur,
- des moyens de calcul de ladite réponse, agencés pour calculer ladite réponse par application d'une première fonction à au moins l'identifiant,
- des moyens de calcul d'un nouvel identifiant, agencés pour calculer le nouvel identifiant par application d'une deuxième fonction à l'identifiant,
- des moyens de calcul de la deuxième valeur, agencés pour calculer la deuxième valeur par application d'une quatrième fonction au nouvel identifiant,
- des moyens de calcul d'une troisième valeur, agencés pour calculer ladite troisième valeur en appliquant une troisième fonction à l'identifiant,
- des moyens de remplacement de l'identifiant, agencés pour remplacer l'identifiant dans l'étiquette par le nouvel identifiant, et
- des moyens de comparaison, agencés pour comparer la première valeur reçue et la troisième valeur calculée et pour activer les moyens de remplacement de l'identifiant en cas d'identité.

L'invention concerne aussi un lecteur radio adapté pour authentifier au moins une étiquette radio identifiée par un identifiant accessible au lecteur par des moyens d'accès à une base de données d'identifiants d'étiquette, le lecteur comprenant :
- des moyens d'envoi, agencés pour envoyer à l'étiquette une requête d'authentification et une première valeur,
- des moyens de réception, agencés pour recevoir en provenance de l'étiquette une réponse à ladite requête d'authentification et une deuxième valeur,
- des moyens de calcul, agencés pour calculer :
   ■ un nouvel identifiant de l'étiquette par application d'une deuxième fonction à un identifiant de la base de données, relatif à l'étiquette,
   la première valeur par application d'une troisième fonction l'identifiant de la base relatif à l'étiquette, et
   une troisième valeur par application de la quatrième fonction au nouvel identifiant,
- des moyens de recherche d'un identifiant relatif à l'étiquette dans la base de données, agencés pour déterminer si la réponse envoyée par l'étiquette correspond à un résultat obtenu par application de la première fonction à un identifiant de la base, les moyens d'envoi étant agencés, en cas de recherche positive, pour envoyer la première valeur calculée par application d'une troisième fonction audit identifiant de la base relatif à l'étiquette,
- des moyens de remplacement, agencés pour remplacer dans la base de données l'identifiant relatif à l'étiquette par le nouvel identifiant,
- des moyens de comparaison, agencés pour comparer la deuxième valeur reçue de l'étiquette à la troisième valeur, lesdits moyens de comparaison étant agencés pour activer lesdits moyens de remplacement dans le cas où la deuxième valeur est égale à la troisième valeur.

Dans une réalisation particulière du lecteur selon l'invention :
- les moyens de calcul sont agencés également pour appliquer successivement la deuxième fonction, puis la première fonction à un identifiant d'étiquette de la base,
- les moyens de recherche d'un identifiant relatif à l'étiquette dans la base de données sont adaptés également pour rechercher, dans le cas où la réponse envoyée par l'étiquette ne correspond à aucun résultat obtenu par application de ladite première fonction à chacun des identifiants d'étiquette de la base, la réponse envoyée par l'étiquette parmi les identifiants de la base auxquels sont appliqués successivement la deuxième fonction, puis la première fonction par les moyens de calcul,
- les moyens de remplacement sont adaptés également, dans le cas où la réponse envoyée par l'étiquette correspond à un résultat obtenu par application de la deuxième fonction, puis la première fonction à un identifiant d'étiquette de la base, pour mettre à jour l'identifiant dans la base en appliquant la deuxième fonction audit identifiant.

L'invention concerne aussi un système d'authentification radio comprenant :
- un lecteur radio selon l'invention, et
- au moins une étiquette radio selon l'invention.

L'invention porte également sur un programme d'ordinateur destiné à être installé dans une mémoire d'un lecteur radio, comprenant des instructions pour la mise en oeuvre des étapes du procédé d'authentification d'une étiquette radio selon l'invention qui sont exécutées par le lecteur, lorsque le programme est exécuté par un processeur.

L'invention concerne aussi un support de données sur lequel est enregistré le programme d'ordinateur selon l'invention.

De nombreux détails et avantages de l'invention seront mieux compris à la lecture de la description d'un mode particulier de réalisation en référence aux schémas annexés donnés à titre non limitatif, et dans lesquels :
- la figure 1 représente les étapes du procédé d'authentification d'une étiquette radio par un lecteur radio, selon un mode particulier de réalisation de l'invention ;
- la figure 2 représente un premier exemple de réalisation d'une étiquette radio selon l'invention ;
- la figure 3 représente un premier exemple de réalisation d'un lecteur radio agencé pour authentifier une étiquette radio représentée sur la figure 2.

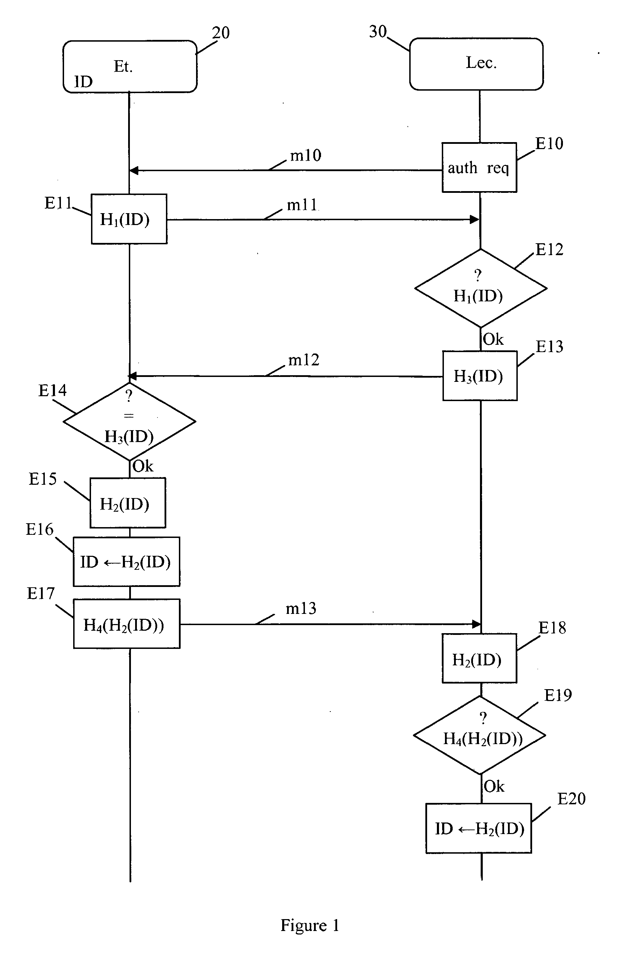

Les étapes d'un procédé d'authentification d'une étiquette radio par un lecteur radio vont maintenant être décrites en relation avec la figure 1.

Un lecteur radio 30 est agencé pour authentifier un ensemble d'étiquettes radio référencées dans une base de données d'identifiants d'étiquette, non représentée, à laquelle le lecteur 30 a accès. Une étiquette radio 20, dotée d'un identifiant unique ID, est référencée dans la base de données d'identifiants à laquelle le lecteur 30 a accès.

Si l'authentification réussit, l'identifiant ID de l'étiquette 20 est mis à jour d'une part dans l'étiquette, et d'autre part dans la base de données 30, à l'aide d'un nouvel identifiant obtenu par application d'une fonction de hachage, notée H₂ qui sera explicitée plus loin, à l'identifiant ID de l'étiquette 20. Une telle mise à jour est comparable à celle effectuée par le protocole d'authentification d'étiquettes radio selon l'état antérieur de la technique, par exemple le protocole "OSK".

Dans une étape initiale E10, le lecteur 30 émet une requête d'authentification dans un message m10.

Après réception de la requête d'authentification m10, dans une étape E11 de calcul et d'envoi d'une réponse, l'étiquette 20 calcule un haché de son identifiant H₁(ID) et envoie une réponse m11 comprenant ce haché d'identifiant H₁(ID). Le haché H₁(ID) est calculé en appliquant une première fonction de hachage H₁ connue à son identifiant ID. Par exemple, l'étiquette 20 utilise comme fonction de hachage SHA-256 ("Secure Hash Algorithm").

Dans une étape de recherche E12, le lecteur 30 calcule le haché de chacun des identifiants de la base de données des identifiants d'étiquette au moyen de la première fonction de hachage H₁ et compare le haché obtenu à la réponse m11 reçue. Si le haché obtenu est égal au haché H₁(ID) reçu de l'étiquette dans la réponse m11, cela signifie que le lecteur 30 a trouvé l'identifiant de l'étiquette 20 dans la base de données.

Si la recherche effectuée à l'étape E12 est positive (branche Ok sur la figure 1), dans une étape E13, le lecteur 30 calcule une première valeur H₃(ID) en appliquant une troisième fonction de hachage H₃ à l'identifiant ID de l'étiquette puis envoie un message m12 comprenant cette première valeur H₃(ID) calculée. Le message m12 est une preuve attestant que le lecteur 30 a connaissance de l'identifiant ID. Il permet donc à l'étiquette 20 de vérifier l'authenticité de la requête d'authentification reçue du lecteur 30 et ainsi, l'honnêteté du lecteur 30.

Dans une étape de contrôle E14, l'étiquette calcule une valeur de contrôle en appliquant la troisième fonction de hachage à son identifiant ID, et compare la valeur de contrôle calculée à la première valeur reçue dans le message m12. En cas d'identité, l'étiquette 20 a la preuve que le lecteur 30 a connaissance de son identifiant ID. Ainsi, elle est assurée d'interagir avec un lecteur 30 honnête. En effet, un lecteur malhonnête, qui n'a a priori pas connaissance de l'identifiant de l'étiquette 20, ne peut pas envoyer un message qui comprend une valeur calculée à partir de cet identifiant.

Dans une étape E15, consécutive à un contrôle positif effectué à l'étape E14 (branche Ok sur la figure 1), l'étiquette 20 calcule une mise à jour de son identifiant. A cette fin, l'étiquette applique la deuxième fonction de hachage H₂ à son identifiant ID pour obtenir un nouvel identifiant H₂(ID). De préférence la deuxième fonction de hachage H₂ est différente de la première fonction de hachage H₁.

Dans une étape E16, l'étiquette remplace dans une mémoire non représentée son identifiant ID par le nouvel identifiant H₂(ID).

Dans une variante de réalisation de l'invention, le calcul du nouvel identifiant et le remplacement dans la mémoire de l'étiquette 20 de l'identifiant ID par le nouvel identifiant se font dans une même étape. Ainsi, il n'y a pas de stockage temporaire du nouvel identifiant H₂(ID), ce qui peut être intéressant pour des étiquettes ayant une capacité mémoire réduite.

Dans une étape E17, l'étiquette 20 envoie dans un message m13 une deuxième valeur calculée en appliquant une quatrième fonction de hachage H₄ au nouvel identifiant H₂(ID) calculé à l'étape E15. L'envoi du message m13 par l'étiquette 20 a pour fonction d'attester au lecteur 30 que l'étiquette 20 a effectué la mise à jour de son identifiant ID. Le message m13 dépendant de l'identifiant ID de l'étiquette 20, un adversaire n'est donc pas en mesure d'envoyer un tel message. Le lecteur 30 qui reçoit le message m13 est donc assuré que ce message provient bien de l'étiquette qu'il est en train d'authentifier.

Dans une étape E18, le lecteur calcule le nouvel identifiant de l'étiquette en appliquant la deuxième fonction de hachage H₂ à l'identifiant ID.

Dans une étape de contrôle E19, le lecteur calcule une valeur de contrôle en appliquant la quatrième fonction de hachage au nouvel identifiant H₂(ID) calculé à l'étape E18, et compare la valeur de contrôle calculée à la deuxième valeur reçue dans le message m13. En cas d'identité, le lecteur 30 est assuré que l'étiquette 20 a effectué une mise à jour de son identifiant ID.

Dans une étape E20, consécutive à un contrôle positif effectué à l'étape E19 (branche Ok sur la figure 1), le lecteur 30 met à jour l'identifiant de l'étiquette 20 en remplaçant dans la base de données des identifiants, l'identifiant ID de l'étiquette 20 par le nouvel identifiant H₂(ID) calculé à l'étape E18.

Dans une réalisation particulière de l'invention non représentée, dans laquelle il n'est pas trouvé, à l'étape E12, la réponse H₁(ID) reçue de l'étiquette dans la base de données d'identifiants d'étiquette, alors le lecteur 30 compare la réponse H₁(ID) reçue à un deuxième haché calculé pour chaque identifiant de la base de données d'identifiants d'étiquette en appliquant successivement la deuxième fonction de hachage H₂, puis la première fonction de hachage H₁. Si la réponse reçue est trouvée, alors le lecteur met à jour dans la base l'identifiant ID en appliquant la deuxième fonction de hachage audit identifiant. On remarquera que seul l'identifiant de l'étiquette 20 est mis à jour dans la base de donnée des identifiants. Le procédé se poursuit ensuite à l'étape E13, l'identifiant ID de l'étiquette 20 étant alors l'identifiant mis à jour H₂(ID).

Dans cette réalisation de l'invention, si la réponse reçue n'est pas trouvée par le lecteur, alors le procédé d'authentification s'arrête. Il n'est pas prévu de faire une nouvelle recherche de la réponse parmi les identifiants de la base auxquels auraient été appliquées deux fois la deuxième fonction de hachage puis la première fonction de hachage. Une telle recherche est en effet inutile puisqu'il n'est pas possible, avec le procédé de l'invention de désynchroniser plus d'une fois une étiquette et la base de données à laquelle accède le lecteur.

Les fonctions de hachage H₁, H₂, H₃ et H₄ utilisées pour calculer les différents hachés sont par exemple des fonctions parmi SHA-256, SHA-384, SHA-512.

Dans une réalisation particulière de l'invention, il est possible d'utiliser une seule fonction de hachage, notée ici H, et de calculer, par exemple :
- H₁(ID) par application de la fonction de hachage H à une concaténation d'une constante, par exemple 1, à l'identifiant ID de l'étiquette (noté H₁(1 ∥ID)),
- H₂(ID) par application de la fonction de hachage H à une concaténation d'une deuxième constante, par exemple 2 à l'identifiant ID de l'étiquette (noté H₂(2 ∥ ID)),
- H₃(ID) par application de la fonction de hachage H à une concaténation d'une deuxième constante, par exemple 3 à l'identifiant ID de l'étiquette (noté H₃(3 ∥ID)),
- H₄(ID) par application de la fonction de hachage H à une concaténation d'une quatrième constante, par exemple 4 à l'identifiant ID de l'étiquette (noté H₄(4 ∥ID)).

Ainsi, pour un même paramètre, ici l'identifiant ID de l'étiquette, on obtient quatre hachés différents à partir de la même fonction de hachage H. Cette réalisation est intéressante dans le cas d'étiquette à capacité mémoire restreinte. En effet, cette réalisation ne nécessite qu'une seule fonction de hachage.

Dans une réalisation alternative de l'invention non représentée, la requête d'authentification m10 envoyée par le lecteur 30 à l'étiquette 20 comprend en outre un premier aléa, alea1, généré par le lecteur. Dans l'étape E11 de calcul et d'envoi d'une réponse, l'étiquette calcule au moyen de la fonction de hachage H₁ un haché d'une donnée obtenue par concaténation de l'identifiant ID de l'étiquette, de l'aléa alea1 reçu du lecteur, et d'un deuxième aléa alea2, généré par l'étiquette. La concaténation est notée H1 (ID ∥ alea1 ∥ alea2). La réponse m11 envoyée par l'étiquette comprend le haché obtenu ainsi que le deuxième aléa alea2.

L'envoi du premier aléa alea1 par le lecteur permet d'éviter un rejeu lors d'une désynchronisation entre l'étiquette et le lecteur. En effet, si un adversaire est susceptible d'observer, voire d'intercepter les messages qui circulent entre le lecteur et l'étiquette, par exemple la réponse m11 de l'étiquette, alors il peut, dans un premier temps, intercepter le message m13 envoyé par l'étiquette au lecteur afin d'attester que l'identifiant a été mis à jour par l'étiquette. L'interception du message m13 provoque une désynchronisation entre l'étiquette et la base de données des identifiants puisque l'étiquette a remplacé son identifiant par le nouvel identifiant mais le lecteur, n'ayant pas reçu le message m13, n'a pas remplacé dans la base de données des identifiants l'identifiant ID de l'étiquette par le nouvel identifiant. L'adversaire peut alors, suite à une nouvelle requête d'authentification envoyée par le lecteur, renvoyer la réponse m11 qu'il avait observée lors des échanges précédents, puis le message m13 qu'il avait intercepté. Ainsi, le lecteur croit authentifier une étiquette valide alors que c'est l'adversaire qui répond à la requête d'authentification du lecteur par des messages précédemment envoyés. Une étiquette erronée, dans le sens, maîtrisée par l'adversaire peut être valablement authentifiée par le lecteur. L'aléa alea1 envoyé par le lecteur évite ce genre d'attaque puisque l'étiquette renvoie, suite à une requête d'authentification du lecteur, une réponse m11 qui contient un haché dépendant de l'aléa aléa1. Un adversaire ne connaissant par l'identifiant de l'étiquette ne peut pas produire une telle réponse.

Le deuxième aléa alea2 généré par l'étiquette assure une non traçabilité entre plusieurs authentifications successives. En effet, supposons qu'au cours d'une première authentification le message m12 ne parvienne pas à l'étiquette (message non envoyé par le lecteur, ou non reçu par l'étiquette). Dans ce cas, l'étiquette ne calcule pas son nouvel identifiant et ne remplace pas son identifiant par le nouvel identifiant. Alors, lors d'une nouvelle authentification de l'étiquette par le lecteur, consécutive à l'envoi par le lecteur d'une requête d'authentification, l'étiquette renvoie une réponse m11 différente de la réponse envoyée lors de la première authentification bien que l'identifiant de l'étiquette n'ait pas changé entre les deux authentifications. En effet, l'aléa alea2 généré par l'étiquette est différent à chaque authentification. Ainsi, la propriété de non traçabilité entre des authentifications successives est bien garantie puisqu'il n'est pas possible de relier deux authentifications d'une même étiquette entre elles.

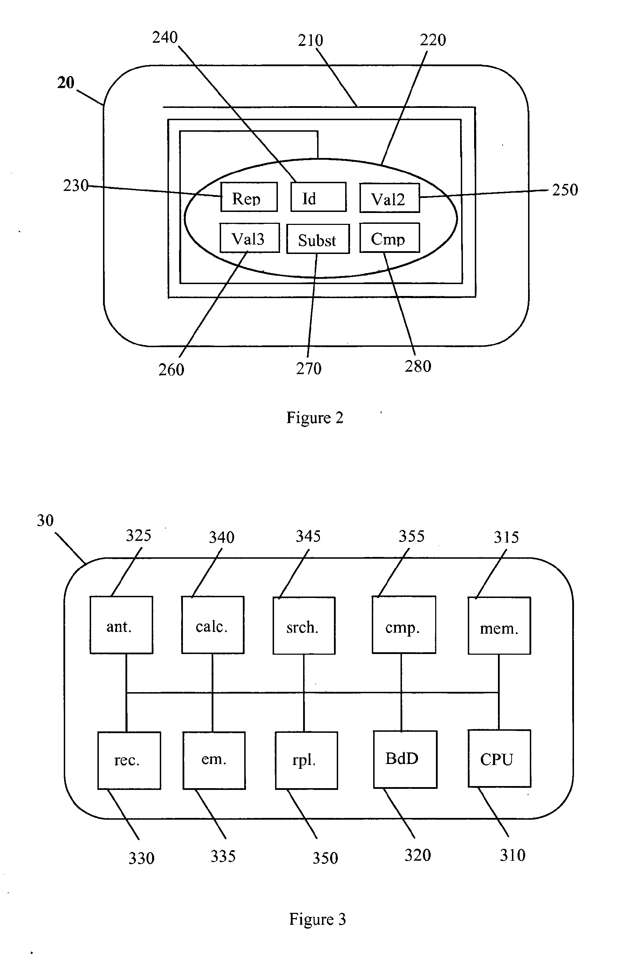

Une étiquette radio selon l'invention va maintenant être décrite en relation avec la figure 2. Une étiquette 20 selon l'invention est adaptée pour dialoguer avec un lecteur radio (non représenté sur la figure 2) au cours d'une séquence d'authentification conforme aux étapes du procédé selon l'invention décrites précédemment.

Dans l'exemple particulier décrit ici, l'étiquette 20 est un dispositif passif recevant son énergie du lecteur lors d'une interrogation par celui-ci. L'étiquette 20 possède un identifiant unique ID et comprend en général :
- des moyens d'envoi et de réception comprenant une antenne 210, adaptés pour recevoir d'un lecteur et envoyer à un lecteur. Les moyens de réception sont adaptés pour recevoir du lecteur une requête d'authentification et une première valeur (H₃(ID)). Les moyens d'envoi sont adaptés pour envoyer au lecteur une réponse et une deuxième valeur (H₄(H₂(ID)) ;
- une puce de silicium 220 comprenant une pluralité de transistors adaptés pour constituer des portes logiques d'une logique câblée non programmable. La logique câblée définit :
   - des moyens 230 de calcul de la réponse (H₁(ID)), agencés pour appliquer une première fonction (H₁) à au moins l'identifiant,
   - des moyens 240 de calcul d'un nouvel identifiant, agencés pour calculer le nouvel identifiant H₂(ID) par application d'une deuxième fonction de hachage H₂ à l'identifiant,
   - des moyens 250 de calcul de la deuxième valeur, agencés pour calculer la deuxième valeur par application d'une quatrième fonction de hachage H₄ au nouvel identifiant H₂(ID),
   - des moyens 260 de calcul d'une troisième valeur, agencés pour calculer ladite troisième valeur en appliquant une troisième fonction H₃ à l'identifiant,
   - des moyens 270 de remplacement de l'identifiant, agencés pour remplacer l'identifiant dans l'étiquette par le nouvel identifiant H₂(ID),
   - des moyens de comparaison 280, agencés pour comparer la première valeur reçue H₃(ID) du lecteur à la troisième valeur, lesdits moyens de comparaison activant les moyens 270 de remplacement de l'identifiant dans le cas où la première valeur est égale à la troisième valeur.

Dans une réalisation particulière de l'invention, où la requête d'authentification reçue du lecteur comprend l'aléa alea1, et la réponse renvoyée par l'étiquette le deuxième aléa alea2, l'étiquette comprend en outre un générateur d'aléas (non représenté), agencé pour générer des aléas.

Dans cette réalisation particulière de l'invention, les moyens de réception 210 sont agencés pour recevoir également le premier aléa alea1 du lecteur. Les moyens 230 de calcul de la réponse sont en outre agencés pour coopérer avec le générateur d'aléas et pour appliquer la première fonction de hachage H₁ à une donnée comprenant l'identifiant ID de l'étiquette, le premier aléa alea1 et un deuxième aléa alea2 généré par le générateur d'aléas. Par exemple, la donnée est une concaténation de ces trois valeurs.

Un lecteur radio selon l'invention va maintenant être décrit en relation avec la figure 3.

Un lecteur radio 30 est un dispositif actif, émetteur de radio fréquences qui active une étiquette (non représentée sur la figure 3) qui passe à sa proximité en lui fournissant une énergie dont elle a besoin. Le lecteur 30 selon l'invention est adapté pour dialoguer avec l'étiquette au cours d'une séquence d'authentification conforme aux étapes du procédé selon l'invention décrites précédemment.

Le lecteur 30 comprend plusieurs modules :
- une unité de traitement 310, ou "CPU" (de l'anglais "Control Processing Unit"),
- un ensemble de mémoires, dont une mémoire volatile 315, ou "RAM" (pour "Random Access Memory") utilisée pour exécuter des instructions de code, stocker des variables, etc.,
- une antenne 325, adaptée pour émettre et recevoir par la voie radio,
- un module d'émission 335, agencé pour envoyer à l'étiquette des requêtes. Le module d'émission 335 utilise l'antenne 325 pour émettre et couplé à l'antenne 325 il constitue des moyens d'émission du lecteur 30. En particulier, les moyens d'émission sont agencés pour envoyer à l'étiquette une requête d'authentification à l'étiquette et une première valeur H₃(ID),
- un module de réception 330, agencé pour recevoir de l'étiquette des réponses à des requêtes transmises par les moyens d'émission 325, 335. Le module de réception 330 utilise l'antenne 325 pour recevoir et couplé à l'antenne 325 il constitue des moyens de réception du lecteur 30. En particulier, les moyens de réception sont agencés pour recevoir de l'étiquette une réponse H₁(ID) et une deuxième valeur H₄(H₂(ID)),
- un module 320 d'accès à une base de données d'identifiants d'étiquette externe au lecteur, non représentée,
- un module de calcul 340, agencé pour calculer un nouvel identifiant de l'étiquette par application d'une deuxième fonction de hachage H₂ à l'identifiant, pour calculer la première valeur (H₃(ID)) par application d'une troisième fonction de hachage H₃ audit identifiant, pour calculer une troisième valeur par application de la quatrième fonction H₄ au nouvel identifiant (H₂(ID)),
- un module de recherche 345, agencé pour chercher la réponse H₁(ID) reçue de l'étiquette dans la base de données d'identifiants en appliquant une première fonction aux identifiants de la base, les moyens d'envoi 335, 325 envoyant la troisième valeur H₃(ID) calculée par application de la troisième fonction H₃ audit identifiant dans le cas où les moyens de recherche trouvent la réponse,
- un module 350 de remplacement de l'identifiant, agencé pour remplacer l'identifiant de l'étiquette par le nouvel identifiant dans la base de données d'identifiants,
- un module de comparaison 355, agencé pour comparer la deuxième valeur reçue H₄(H₂(ID)) de l'étiquette à la troisième valeur, lesdits moyens de comparaison activant le module 350 de remplacement de l'identifiant dans le cas où la deuxième valeur est égale à la troisième valeur.

Les modules communiquent via un bus de communication.

Les modules 320, 330, 335, 340, 345, 350, 355 sont agencés pour mettre en oeuvre les étapes du procédé d'authentification d'une étiquette radio par le lecteur radio décrit précédemment. Il s'agit de préférence de modules logiciels comprenant des instructions logicielles pour faire exécuter les étapes du procédé d'authentification d'une étiquette.

L'invention concerne donc aussi :
- un programme d'ordinateur comportant des instructions pour la mise en oeuvre du procédé d'authentification d'une étiquette tel que décrit précédemment, lorsque ce programme est exécuté par un processeur ;
- un support d'enregistrement lisible par un lecteur sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal, ou un réseau de télécommunication.

Dans une réalisation particulière de l'invention dans laquelle la réponse H₁(ID) renvoyée par l'étiquette ne correspondant à aucun résultat obtenu par application de ladite première fonction à chacun des identifiants d'étiquette de la base, il est recherché la réponse envoyée parmi les identifiants de la base auxquels sont appliqués successivement la deuxième fonction, puis la première fonction de hachage. Dans le cas où la réponse H₁(ID) envoyée par l'étiquette correspond à un résultat obtenu par application de la deuxième fonction, puis la première fonction à un identifiant d'étiquette de la base H₁(H₂(ID), l'identifiant ID de l'étiquette est mis à jour dans la base en appliquant la deuxième fonction (H₂) audit identifiant, l'identifiant ID de l'étiquette 20 étant alors l'identifiant mis à jour H₂(ID). Dans cette réalisation particulière :
- les moyens de calcul 340 sont agencés également pour appliquer successivement la deuxième fonction H₂, puis la première fonction H₁ à un identifiant d'étiquette de la base,
- les moyens 345 de recherche d'un identifiant relatif à l'étiquette dans la base de données sont adaptés pour rechercher également, dans le cas où la réponse H₁(ID) envoyée par l'étiquette ne correspond à aucun résultat obtenu par application de ladite première fonction à chacun des identifiants d'étiquette de la base, la réponse envoyée par l'étiquette parmi les identifiants de la base auxquels sont appliqués successivement la deuxième fonction H₂, puis la première fonction H₁ par les moyens de calcul 340,
- les moyens de remplacement 350 sont agencés également pour mettre à jour l'identifiant ID dans la base en appliquant la deuxième fonction de hachage H₂ audit identifiant, dans le cas où la réponse H₁(ID) envoyée par l'étiquette correspond à un résultat obtenu par application de la deuxième fonction, puis la première fonction de hachage à un identifiant d'étiquette de la base H₁(H₂(ID).

Dans une autre réalisation particulière de l'invention, où la requête d'authentification envoyée par le lecteur comprend l'aléa alea1, et la réponse reçue de l'étiquette le deuxième aléa alea2, le lecteur comprend en outre :
- un générateur d'aléas (non représenté), agencé pour générer des aléas.

Dans cette réalisation de l'invention :
- les moyens d'émission 325, 335 sont agencés pour coopérer avec le générateur d'aléas pour envoyer à l'étiquette le premier aléa alea1 dans la requête d'authentification,
- les moyens de réception 325, 330 sont agencés pour recevoir également le deuxième aléa alea2 de l'étiquette,
- les moyens de calcul 340 sont en outre agencés pour appliquer la première fonction de hachage H₁ à une donnée comprenant un identifiant de la base, le premier aléa alea1 et le deuxième aléa alea2 reçu de l'étiquette. Par exemple, la donnée est une concaténation de ces trois valeurs.

Dans une réalisation particulière de l'invention, non détaillée, l'étiquette 20 est un dispositif actif. L'étiquette 20 est alors équipée d'une batterie lui permettant d'émettre des signaux. Ainsi, l'étiquette 20 et le lecteur 30 peuvent interagir sur une distance plus importante que dans le cas où l'étiquette 20 est un dispositif passif qui reçoit son énergie du lecteur.

Dans une autre réalisation de l'invention non détaillée, l'étiquette 20 a une structure comparable à celle d'une carte à puce et comprend un microprocesseur cryptographique, une mémoire de données, une mémoire programme.

## Revendications

1. Procédé d'authentification d'une étiquette radio (20) par un lecteur radio (30), l'étiquette possédant un identifiant (ID) accessible au lecteur via une base de données d'identifiants d'étiquette, comprenant :
- un envoi (E10) d'une requête d'authentification par le lecteur à l'étiquette,
- un envoi (E11) par l'étiquette d'une réponse, calculée par application d'une première fonction à au moins l'identifiant (H₁(ID)),
- un calcul (E15, E18) par l'étiquette et par le lecteur d'un nouvel identifiant (H₂(ID)), par application d'une deuxième fonction à l'identifiant, **caractérisé en ce qu'**il comprend :
- si la réponse (H₁(ID)) envoyée par l'étiquette correspond à un résultat obtenu par application de ladite première fonction à un identifiant de la base, un envoi (E13) par le lecteur (30) d'une première valeur (H₃(ID)), calculée par application d'une troisième fonction audit identifiant de la base,
- si la première valeur (H₃(ID)) envoyée correspond à une valeur obtenue par application à l'identifiant de l'étiquette de la troisième fonction (H₃), un remplacement (E16) dans l'étiquette (20) de l'identifiant (ID) par le nouvel identifiant (H₂(ID)) calculé par l'étiquette,
- un (E17) envoi d'une deuxième valeur (H₄(H₂(ID)) au lecteur, obtenue par application d'une quatrième fonction au nouvel identifiant (H₂(ID)) calculé par l'étiquette,
- si la deuxième valeur (H₄(H₂(ID))) envoyée correspond à une valeur obtenue par application de la quatrième fonction (H₄) au nouvel identifiant (H₂(ID)) calculé par le lecteur, un remplacement (E20) dans la base de données de l'identifiant de l'étiquette par le nouvel identifiant.

2. Procédé selon la revendication 1, comprenant, si la réponse (H₁(ID)) envoyée par l'étiquette ne correspond à aucun résultat obtenu par application de ladite première fonction à chacun des identifiants d'étiquette de la base :
- une recherche de la réponse envoyée par l'étiquette parmi les identifiants de la base auxquels sont appliqués successivement la deuxième fonction, puis la première fonction,
- si la réponse (H₁(ID)) envoyée par l'étiquette correspond à un résultat obtenu par application de la deuxième fonction, puis la première fonction à un identifiant d'étiquette de la base (H₁(H₂(ID)), une mise à jour dans la base de l'identifiant (ID) en appliquant la deuxième fonction (H₂) audit identifiant.

3. Procédé selon la revendication 1, dans lequel :
- la requête d'authentification comprend un premier aléa (alea1) généré par le lecteur, et
- la réponse comprend un deuxième aléa (alea2) généré par l'étiquette, et un haché obtenu par application de la première fonction à une donnée comprenant l'identifiant de l'étiquette, le premier aléa (alea1) reçu du lecteur et le deuxième aléa (alea2).

4. Etiquette radio adaptée pour être authentifiée par un lecteur radio, l'étiquette possédant un identifiant (ID), et comprenant :
- des moyens de réception (210), agencés pour recevoir en provenance du lecteur une requête d'authentification et une première valeur (H₃(ID)),
- des moyens d'envoi (210), agencés pour envoyer au lecteur une réponse à ladite requête d'authentification et une deuxième valeur (H₄(H₂(ID)),
- des moyens (230) de calcul de ladite réponse (H₁(ID)), agencés pour calculer ladite réponse par application d'une première fonction (H1) à au moins l'identifiant,
- des moyens (240) de calcul d'un nouvel identifiant, agencés pour calculer le nouvel identifiant (H₂(ID)) par application d'une deuxième fonction (H₂) à l'identifiant,
- des moyens (250) de calcul de la deuxième valeur, agencés pour calculer la deuxième valeur par application d'une quatrième fonction (H₄) au nouvel identifiant (H₂(ID)),
- des moyens (260) de calcul d'une troisième valeur, agencés pour calculer ladite troisième valeur en appliquant une troisième fonction (H₃) à l'identifiant,
- des moyens (270) de remplacement de l'identifiant, agencés pour remplacer l'identifiant dans l'étiquette par le nouvel identifiant (H₂(ID)), et
- des moyens de comparaison (280), agencés pour comparer la première valeur reçue (H₃(ID)) et la troisième valeur calculée et pour activer les moyens de remplacement de l'identifiant en cas d'identité.

5. Lecteur radio adapté pour authentifier au moins une étiquette radio identifiée par un identifiant (ID) accessible au lecteur par des moyens d'accès à une base de données d'identifiants d'étiquette, le lecteur comprenant :
- des moyens d'envoi (325, 335), agencés pour envoyer à l'étiquette une requête d'authentification et une première valeur (H₃(ID)),
- des moyens de réception (325, 330), agencés pour recevoir en provenance de l'étiquette une réponse (H₁(ID)) à ladite requête d'authentification et une deuxième valeur (H₄(H₂(ID))),
- des moyens de calcul (340), agencés pour calculer :
■ un nouvel identifiant (H₂(ID)) de l'étiquette par application d'une deuxième fonction (H₂) à un identifiant de la base de données, relatif à l'étiquette,
■ la première valeur (H₃(ID)) par application d'une troisième fonction l'identifiant de la base relatif à l'étiquette, et
■ une troisième valeur par application de la quatrième fonction (H₄) au nouvel identifiant (H₂(ID)),
- des moyens (345) de recherche d'un identifiant relatif à l'étiquette dans la base de données, agencés pour déterminer si la réponse (H₁(ID)) envoyée par l'étiquette correspond à un résultat obtenu par application de la première fonction à un identifiant de la base, les moyens d'envoi étant agencés, en cas de recherche positive, pour envoyer la première valeur (H₃(ID)) calculée par application d'une troisième fonction (H3) audit identifiant de la base relatif à l'étiquette,
- des moyens de remplacement (350), agencés pour remplacer dans la base de données l'identifiant relatif à l'étiquette par le nouvel identifiant,
- des moyens de comparaison (355), agencés pour comparer la deuxième valeur reçue (H₄(H₂(ID))) de l'étiquette à la troisième valeur, lesdits moyens de comparaison étant agencés pour activer lesdits moyens de remplacement dans le cas où la deuxième valeur est égale à la troisième valeur.

6. Lecteur radio selon la revendication 5, dans lequel :
- les moyens de calcul (340) sont agencés également pour appliquer successivement la deuxième fonction (H₂), puis la première fonction (H₁) à un identifiant d'étiquette de la base,
- les moyens (345) de recherche d'un identifiant relatif à l'étiquette dans la base de données sont adaptés également pour rechercher, dans le cas où la réponse (H₁(ID)) envoyée par l'étiquette ne correspond à aucun résultat obtenu par application de ladite première fonction à chacun des identifiants d'étiquette de la base, la réponse envoyée par l'étiquette parmi les identifiants de la base auxquels sont appliqués successivement la deuxième fonction (H2), puis la première fonction (H1) par les moyens de calcul (340),
- les moyens de remplacement (350) sont adaptés également, dans le cas où la réponse (H₁(ID)) envoyée par l'étiquette correspond à un résultat obtenu par application de la deuxième fonction, puis la première fonction à un identifiant d'étiquette de la base (H₁(H₂(ID)), pour mettre à jour l'identifiant (ID) dans la base en appliquant la deuxième fonction (H₂) audit identifiant.

7. Système d'authentification radio comprenant :
- un lecteur radio selon la revendication 5, et
- au moins une étiquette radio selon la revendication 4.

8. Programme d'ordinateur destiné à être installé dans une mémoire d'un lecteur radio, comprenant des instructions pour la mise en oeuvre des étapes du procédé d'authentification d'une étiquette radio selon l'une des revendications 1 à 3 qui sont exécutées par le lecteur, lorsque le programme est exécuté par un processeur.

9. Support de données sur lequel est enregistré le programme d'ordinateur selon la revendication 8.

## Patentansprüche

1. Verfahren zum Authentifizieren eines Funketiketts (20) durch einen Funkleser (30), wobei das Etikett eine Kennung (ID) aufweist, die für den Leser über eine Datenbasis mit Etikettkennungen zugänglich ist, umfassend:
- ein Senden (E10) einer Authentifizierungsanfrage durch den Leser an das Etikett,
- ein Senden (E11) einer Antwort durch das Etikett, die durch Anwenden einer ersten Funktion auf mindestens die Kennung (H₁(ID)) berechnet ist,
- ein Berechnen (E15, E18) durch das Etikett und den Leser einer neuen Kennung (H₂(ID)) durch Anwenden einer zweiten Funktion auf die Kennung,
**dadurch gekennzeichnet, dass** es Folgendes aufweist:
- wenn die Antwort (H₁(ID)), die von dem Etikett geschickt ist, einem Ergebnis entspricht, das durch Anwenden der ersten Funktion auf eine Kennung der Datenbasis erhalten ist, ein Senden (E13) durch den Leser (30) eines ersten Werts (H₃(ID)), der durch Anwenden einer dritten Funktion auf die Kennung der Datenbasis berechnet ist,
- wenn der erste gesendete Wert (H₃(ID)) einem Wert entspricht, der durch Anwenden der dritten Funktion (H₃) auf die Kennung des Etiketts erhalten ist, ein Ersetzen (E16) der Kennung (ID) in dem Etikett (20) durch die neue Kennung (H₂(ID)), die durch das Etikett berechnet ist,
- ein (E17) Senden eines zweiten Werts (H₄(H₂(ID))) an den Leser, der durch Anwenden einer vierten Funktion auf die neue Kennung (H₂(ID)), die durch das Etikett berechnet ist, erhalten ist,
- wenn der zweite gesendete Wert (H₄(H₂(ID))) einem Wert entspricht, der durch Anwenden der vierten Funktion (H₄) auf die neue Kennung (H₂(ID)), die durch den Leser berechnet ist, erhalten ist, ein Ersetzen (E20) der Kennung des Etiketts in der Datenbasis durch die neue Kennung.

2. Verfahren nach Anspruch 1, umfassend, wenn die Antwort (H₁(ID)), die von dem Etikett gesendet ist, keinem Ergebnis entspricht, das durch Anwenden der ersten Funktion auf jede der Kennungen des Etiketts der Datenbasis erhalten ist:
- ein Suchen der Antwort, die von dem Etikett gesendet ist, unter den Kennungen der Datenbasis, auf die nacheinander die zweite Funktion, dann die erste Funktion angewendet sind,
- wenn die Antwort (H₁(ID)), die von dem Etikett gesendet ist, einem Ergebnis entspricht, das durch Anwenden der zweiten Funktion, dann der ersten Funktion auf eine Kennung des Etiketts der Datenbasis (H₁(H₂(ID))) erhalten ist, ein Aktualisieren der Kennung (ID) in der Datenbasis durch Anwenden der zweiten Funktion (H₂) auf die Kennung.

3. Verfahren nach Anspruch 1, wobei:
- die Authentifizierungsanfrage ein erstes Zufallselement (Zufallselement 1) aufweist, das von dem Leser generiert ist und
- die Antwort ein zweites Zufallselement (Zufallselement 2), das von dem Etikett generiert ist, und ein Punktieren aufweist, das durch Anwenden der ersten Funktion auf ein Datenpaket erhalten ist, das die Kennung des Etiketts, das erste Zufallselement (Zufallselement 1), das von dem Leser erhalten ist, und das zweite Zufallselement (Zufallselement 2) aufweist.

4. Funketikett, das geeignet ist, um durch einen Funkleser authentifiziert zu werden, wobei das Etikett eine Kennung (ID) aufweist, und umfassend:
- Mittel zum Empfangen (210), die angeordnet sind, um von dem Leser eine Authentifizierungsanfrage und einen ersten Wert (H₃(ID)) zu erhalten,
- Mittel zum Senden (210), die angeordnet sind, um dem Leser eine Antwort auf die Authentifizierungsanfrage und einen zweiten Wert (H₄(H₂(ID))) zu senden,
- Mittel (230) zum Berechnen der Antwort (H₁(ID)), die angeordnet sind, um die Antwort durch Anwenden einer ersten Funktion (H1) auf mindestens die Kennung zu berechnen,
- Mittel (240) zum Berechnen einer neuen Kennung, die angeordnet sind, um die neue Kennung (H₂(ID)) durch Anwenden einer zweiten Funktion (H₂) auf die Kennung zu berechnen,
- Mittel (250) zum Berechnen des zweiten Werts, die angeordnet sind, um den zweiten Wert durch Anwenden einer vierten Funktion (H₄) auf die neue Kennung (H₂(ID)) zu berechnen,
- Mittel (260) zum Berechnen eines dritten Werts, die angeordnet sind, um den dritten Wert durch Anwenden einer dritten Funktion (H₃) auf die Kennung zu berechnen,
- Mittel (270) zum Ersetzen der Kennung, die angeordnet sind, um die Kennung in dem Etikett durch die neue Kennung (H₂(ID)) zu ersetzen,
- Mittel zum Vergleichen (280), die angeordnet sind, um den ersten empfangenen Wert (H₃(ID)) und den dritten berechneten Wert zu vergleichen und um die Mittel zum Ersetzen der Kennung im Falle der Übereinstimmung zu betätigen.

5. Funkleser, der geeignet ist, um mindestens ein Funketikett zu authentifizieren, das durch eine Kennung (ID) identifiziert ist, die dem Leser durch Zugriffsmittel auf eine Datenbasis mit Etikettkennungen zugänglich ist, wobei der Leser Folgendes aufweist:
- Mittel zum Senden (325, 335), die angeordnet sind, um dem Etikett eine Authentifizierungsanfrage und einen ersten Wert (H₃(ID)) zu senden,
- Mittel zum Empfangen (325, 330), die angeordnet sind, um von dem Etikett eine Antwort (H₁(ID)) auf die Authentifizierungsanfrage und einen zweiten Wert (H₄(H₂(ID))) zu empfangen,
- Mittel zum Berechnen (340), die angeordnet sind, um Folgendes zu berechnen:
• eine neue Kennung (H₂(ID)) des Etiketts durch Anwenden einer zweiten Funktion (H₂) auf eine Kennung der Datenbasis in Bezug auf das Etikett,
• den ersten Wert (H₃(ID)) durch Anwenden einer dritten Funktion auf die Kennung der Datenbasis in Bezug auf das Etikett und
• einen dritten Wert durch Anwenden der vierten Funktion (H₄) auf die neue Kennung (H₂(ID)),
- Mittel (345) zum Suchen einer Kennung in Bezug auf das Etikett in der Datenbasis, die angeordnet sind, um zu bestimmen, ob die Antwort (H₁(ID)), die von dem Etikett gesendet ist, einem Ergebnis entspricht, das durch Anwenden der ersten Funktion auf eine Kennung der Datenbasis erhalten ist, wobei die Sendemittel angeordnet sind, um im Fall von einem erfolgreichen Suchen den ersten Wert (H₃(ID)), der durch Anwenden einer dritten Funktion (H3) auf die Kennung der Datenbasis in Bezug auf das Etikett berechnet ist, zu senden,
- Mittel zum Ersetzen (350), die angeordnet sind, um in der Datenbasis die Kennung in Bezug auf das Etikett durch die neue Kennung zu ersetzen,
- Mittel zum Vergleichen (355), die angeordnet sind, um den zweiten empfangenen Wert (H₄(H₂(ID))) von dem Etikett mit dem dritten Wert zu vergleichen, wobei die Mittel zum Vergleichen angeordnet sind, um die Mittel zum Ersetzen zu betätigen, falls der zweite Wert dem dritten Wert gleich ist.

6. Funkleser nach Anspruch 5, wobei:
- die Mittel zum Berechnen (340) ebenfalls angeordnet sind, um nacheinander die zweite Funktion (H₂), dann die erste Funktion (H₁) auf eine Kennung des Etiketts der Basis anzuwenden,
- die Mittel (345) zum Suchen einer Kennung in Bezug auf das Etikett in der Datenbasis ebenfalls angeordnet sind, um, falls die Antwort (H₁(ID)), die von dem Etikett gesendet ist, keinem Ergebnis entspricht, das durch Anwenden der ersten Funktion auf jede der Kennungen des Etiketts der Datenbasis erhalten ist, die Antwort, die von dem Etikett gesendet ist, unter den Kennungen der Datenbasis zu suchen, auf die nacheinander die zweite Funktion (H2), dann die erste Funktion (H1) von den Mitteln zum Berechnen (340) angewendet sind,
- die Mittel zum Ersetzen (350) ebenfalls angeordnet sind, um, falls die Antwort (H₁(ID)), die von dem Etikett gesendet ist, einem Ergebnis entspricht, das durch Anwenden der zweiten Funktion, dann der ersten Funktion auf eine Kennung des Etiketts der Datenbasis (H₁(H₂(ID))) erhalten ist, die Kennung (ID) in der Datenbasis durch Anwenden der zweiten Funktion (H₂) auf die Kennung zu aktualisieren.

7. Funkauthentifizierungssystem, umfassend:
- einen Funkleser nach Anspruch 5 und
- mindestens ein Funketikett nach Anspruch 4.

8. Computerprogramm, das dazu bestimmt ist, in einem Speicher eines Funklesers installiert zu werden, das Anweisungen zum Umsetzen der Schritte des Verfahrens zum Authentifizieren eines Funketiketts nach einem der Ansprüche 1 bis 3 aufweist, die von dem Leser ausgeführt sind, während das Programm von einen Prozessor ausgeführt ist.

9. Datenträger, auf dem das Computerprogramm nach Anspruch 8 aufgezeichnet ist.

## Claims

1. Method for authenticating a radiofrequency identification tag (20) by a radiofrequency identification reader (30), the tag having an identifier (ID) accessible to the reader via a database of tag identifiers, comprising:
- a sending (E10) of an authentication request by the reader to the tag,
- a sending (E11) by the tag of a response, calculated by applying a first function to at least the identifier (H₁(ID)),
- a calculation (E15, E18) by the tag and by the reader of a new identifier (H₂(ID)), by applying a second function to the identifier,
**characterized in that** it comprises:
- if the response (H₁(ID)) sent by the tag corresponds to a result obtained by applying said first function to an identifier in the database, a sending (E13) by the reader (30) of a first value (H₃(ID)), calculated by applying a third function to said identifier from the database,
- if the first value (H₃(ID)) sent corresponds to a value obtained by applying the third function (H₃) to the tag identifier, a replacement (E16) in the tag (20) of the identifier (ID) with the new identifier (H₂(ID)) calculated by the tag,
- a sending (E17) of a second value (H₄(H₂(ID))) to the reader, obtained by applying a fourth function to the new identifier (H₂(ID)) calculated by the tag,
- if the second value (H₄(H₂(ID))) sent corresponds to a value obtained by applying the fourth function (H₄) to the new identifier (H₂(ID)) calculated by the reader, a replacement (E20) in the database of the tag identifier with the new identifier.

2. Method according to Claim 1, comprising, if the response (H₁(ID)) sent by the tag does not correspond to any result obtained by applying said first function to each of the tag identifiers in the database:
- a search for the response sent by the tag among the identifiers in the database to which the second function and then the first function are applied in succession,
- if the response (H₁(ID)) sent by the tag corresponds to a result obtained by applying the second function and then the first function to a tag identifier from the database (H₁H₂(ID))), an update in the database of the identifier (ID) by applying the second function (H₂) to said identifier.

3. Method according to Claim 1, in which:
- the authentication request includes a first random value (randomvalue1) generated by the reader, and
- the response includes a second random value (randomvalue2) generated by the tag, and a hash obtained by applying the first function to a datum including the identifier of the tag, the first random value (randomvalue1) received from the reader and the second random value (randomvalue2).

4. Radiofrequency identification tag suitable for being authenticated by a radiofrequency identification reader, the tag having an identifier (ID), and comprising:
- reception means (210), arranged to receive from the reader an authentication request and a first value (H₃(ID)),
- sending means (210), arranged to send to the reader a response to said authentication request and a second value (H₄(H₂(ID))),
- means (230) for calculating said response (H₁(ID)), arranged to calculate said response by applying a first function (H1) to at least the identifier,
- means (240) for calculating a new identifier, arranged to calculate the new identifier (H₂(ID)) by applying a second function (H₂) to the identifier,
- means (250) for calculating the second value, arranged to calculate the second value by applying a fourth function (H₄) to the new identifier (H₂(ID)),
- means (260) for calculating a third value, arranged to calculate said third value by applying a third function (H₃) to the identifier,
- means (270) for replacing the identifier, arranged to replace the identifier in the tag with the new identifier (H₂(ID)), and
- comparison means (280), arranged to compare the received first value (H₃(ID)) and the calculated third value and to activate the means for replacing the identifier if there is a match.

5. Radiofrequency identification reader suitable for authenticating at least one radiofrequency identification tag identified by an identifier (ID) accessible to the reader by means for accessing a database of tag identifiers, the reader comprising:
- sending means (325, 335), arranged to send to the tag an authentication request and a first value (H₃(ID)),
- reception means (325, 330), arranged to receive from the tag a response (H₁(ID)) to said authentication request and a second value (H₄(H₂(ID))),
- calculation means (340), arranged to calculate:
• a new identifier (H₂(ID)) of the tag by applying a second function (H₂) to an identifier from the database, relating to the tag,
• the first value (H₃(ID)) by applying a third function to the identifier from the database relating to the tag, and
• a third value by applying the fourth function (H₄) to the new identifier (H₂(ID)),
- means (345) for searching for an identifier relating to the tag in the database, arranged to determine whether the response (H₁(ID)) sent by the tag corresponds to a result obtained by applying the first function to an identifier from the database, the sending means being arranged, in the event of a positive search, to send the first value (H₃(ID)) calculated by applying a third function (H3) to said identifier from the database relating to the tag,
- replacement means (350), arranged to replace in the database the identifier relating to the tag with the new identifier,
- comparison means (355), arranged to compare the second value received (H₄(H₂(ID))) from the tag to the third value, said comparison means being arranged to activate said replacement means in the case where the second value matches the third value.

6. Radiofrequency identification reader according to Claim 5, in which:
- the calculation means (340) are also arranged to apply in succession the second function (H₂) and then the first function (H₁) to a tag identifier from the database,
- the means (345) for searching for an identifier relating to the tag in the database are also suitable for searching, in the case where the response (H₁(ID)) sent by the tag does not correspond to any result obtained by applying said first function to each of the tag identifiers in the database, for the response sent by the tag among the identifiers in the database to which the second function (H2) and then the first function (H1) are applied in succession by the calculation means (340),
- the replacement means (350) are also suitable, in the case where the response (H₁(ID)) sent by the tag corresponds to a result obtained by applying the second function and then the first function to a tag identifier from the database (H₁(H₂(ID))), for updating the identifier (ID) in the database by applying the second function (H₂) to said identifier.

7. Radiofrequency authentication system comprising:
- a radiofrequency identification reader according to Claim 5, and
- at least one radiofrequency identification tag according to Claim 4.

8. Computer program intended to be installed in a memory of a radiofrequency identification reader, comprising instructions for implementing the steps of the method for authenticating a radiofrequency identification tag according to one of Claims 1 to 3 which are executed by the reader, when the program is executed by a processor.

9. Data medium on which is stored the computer program according to Claim 8.
